# EUROPEAN PATENT APPLICATION

(11) **EP 4 826 829 A1**
(43) Date of publication of application: **21.10.2026**
(21) Application number: 24903824.1
(22) Date of filing: 29.03.2024
(51) Int. Cl.: H01M 10/0585, H01M 50/105, H01M 50/186, H01M 10/052

(54) **ALL-SOLID-STATE RECHARGEABLE BATTERY**

(30) Priority: 15.12.2023 KR 20230183528
(71) Applicant: SAMSUNG SDI CO., LTD., Yongin-si, Gyeonggi-do 17084 (KR)
(72) Inventor: KIM, Juyun, Yongin-si, Gyeonggi-do 17084 (KR); HA, Jaehwan, Yongin-si, Gyeonggi-do 17084 (KR); KANG, Yujin, Yongin-si, Gyeonggi-do 17084 (KR); KOO, Dongho, Yongin-si, Gyeonggi-do 17084 (KR)
(74) Representative: Michalski Hüttermann & Partner mbB
(86) International application number: PCT/KR2024/004044
(87) International publication number: WO 2025/127251

(57) **Abstract**

Provided is an all-solid rechargeable battery including: an all-solid-state electrode assembly including a negative electrode, a positive electrode, and a solid electrolyte layer placed between the negative electrode and the positive electrode; a pouch which stores the all-solid-state electrode assembly in an inner space and includes a sealing part which seals the inner space; a negative electrode tab which protrudes from the negative electrode of the all-solid-state electrode assembly through the sealing part to the outside of the pouch; and a positive electrode tab which is separated from the negative electrode tab and protrudes from the positive electrode of the all-solid-state electrode assembly through the sealing part to the outside of the pouch.

## Description

### [Technical Field]

The present disclosure relates to an all-solid rechargeable battery.

### [Background Art]

Recently, as the explosion risk of a battery using a liquid electrolyte has been reported, development of an all-solid rechargeable battery is in progress. The all-solid rechargeable battery is a battery formed of materials which are all solids and refers to a battery using a solid electrolyte.

The all-solid rechargeable battery is safe, since it has no risk such as explosion due to electrolyte leak, and it is easy to manufacture a thin battery using the battery.

A conventional all-solid rechargeable battery includes an all-solid-state electrode assembly including a negative electrode, a positive electrode, and a solid electrolyte layer, and a pouch storing it inside.

### [Disclosure]

### [Technical Problem]

The present disclosure attempts to provide an all-solid rechargeable battery capable of suppressing thermal runaway of an all-solid rechargeable battery by opening a part of a pouch when heat is produced inside the pouch of the all-solid rechargeable battery.

The present disclosure also attempts to provide an all-solid rechargeable battery capable of suppressing short circuit of electrode of an all-solid-state electrode assembly when heat is produced inside the pouch of the all-solid rechargeable battery.

### [Technical Solution]

An embodiment of the present disclosure provides an all-solid rechargeable battery including: an all-solid-state electrode assembly including a negative electrode, a positive electrode, and a solid electrolyte layer placed between the negative electrode and the positive electrode; a pouch which stores the all-solid-state electrode assembly in an inner space and includes a sealing part which seals the inner space; a negative electrode tab which protrudes from the negative electrode of the all-solid-state electrode assembly through the sealing part to the outside of the pouch; and a positive electrode tab which is separated from the negative electrode tab and protrudes from the positive electrode of the all-solid-state electrode assembly through the sealing part to the outside of the pouch, wherein the sealing part includes a first organic material layer which is in contact with the negative electrode tab and the positive electrode tab and melts at a first temperature and a second organic material layer which is in contact with the negative electrode tab, the positive electrode tab, and the first organic material layer and melts at a second temperature lower than the first temperature.

The first organic material layer may include a first bottom organic material layer placed on a rear surface of the negative electrode tab and a rear surface of the positive electrode tab, and a first top organic material layer placed on a front surface of the negative electrode tab and a front surface of the positive electrode tab.

The first bottom organic material layer may be in contact with the rear surface of the negative electrode tab.

The first bottom organic material layer may be separated from the rear surface of the positive electrode tab.

The second organic material layer may include a second bottom organic material layer placed between the first bottom organic material layer and the positive electrode tab.

The second bottom organic material layer may be in contact with the positive electrode tab.

The second bottom organic material layer may be inserted into the first bottom organic material layer.

The first top organic material layer may be in contact with the front surface of the negative electrode tab.

The first top organic material layer may be separated from the front surface of the negative electrode tab.

The second organic material layer may be placed between the first top organic material layer and the negative electrode tab.

The second top organic material layer may be in contact with the negative electrode tab.

The second top organic material layer may be inserted into the first top organic material layer.

The negative electrode tab may be closer to the first bottom organic material layer than the positive electrode tab, and the positive electrode tab may be closer to the first top organic material layer than the negative electrode tab.

The second organic material layer may extend from between the front surface of the negative electrode tab and the first top organic material layer to between the rear surface of the positive electrode tab and the first bottom organic material layer.

A pressurizing jig which pressurizes front and rear surfaces of the pouch may be further included.

The second temperature may include 130°C to 150°C.

The first temperature may include 170°C to 180°C.

The pouch may further include a metal layer which surrounds the all-solid-state electrode assembly, an inner organic material layer placed on an inner surface of the metal layer, and an outer organic material layer placed on an outer surface of the metal layer.

The inner organic material layer may be integrated with the first organic material layer.

Each of the negative electrode tab and the positive electrode tab may include a sealant coated on the surface.

### [Advantageous Effects]

According to an embodiment, an all-solid rechargeable battery, in which, when heat is produced inside the pouch of the all-solid rechargeable battery, a part of the pouch is opened to suppress thermal runaway of the all-solid rechargeable battery, is provided.

In addition, an all-solid rechargeable battery, in which, when heat is produced inside the pouch of the all-solid rechargeable battery, short circuit of electrodes of the all-solid-state electrode assembly is suppressed, is provided.

### [Description of the Drawings]

FIG. 1 is a cross-sectional view of an all-solid-state battery.
FIG. 2 is a cross-sectional view of an all-solid-state battery including a precipitation type negative electrode.
FIG. 3 is a top plan view showing an all-solid rechargeable battery according to an embodiment.
FIG. 4 is a cross-sectional view taken along the line IV-IV of FIG. 3.
FIG. 5 is a cross-sectional view taken along the line V-V of FIG. 3.
FIG. 6 is cross-sectional views showing a part of the all-solid rechargeable battery according to an embodiment in order to describe the effect of the all-solid rechargeable battery according to an embodiment.
FIG. 7 is a cross-sectional view showing a part of an all-solid rechargeable battery according to another embodiment.
FIG. 8 is cross-sectional views showing a part of an all-solid rechargeable battery according to another embodiment in order to describe the effect of the all-solid rechargeable battery according to another embodiment.

### [Mode for Invention]

Hereinafter, various embodiments of the present disclosure will be described in detail so as to be easily carried out by a person skilled in the art to which the present disclosure pertains, referring to an accompanying drawing. The present disclosure may be implemented in various different forms, and is not limited to the embodiments described herein.

In addition, throughout the specification, the word "comprise" and variations such as "comprises" or "comprising" will be understood to imply the inclusion of stated elements but not the exclusion of any other elements.

In the drawings, the thickness of layers, films, panels, regions, etc., are exaggerated for clarity, and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, a "layer" herein includes shapes formed on a part of a surface as well as shapes formed on the entire surface, when observed in a plane view. Herein, "or" is not interpreted as having an exclusive meaning, and for example, "A or B" is interpreted as including A, B, A+B, and the like.

### Positive electrode for all-solid rechargeable battery

In an embodiment, a positive electrode for an all-solid rechargeable battery including a current collecting layer and a positive electrode active material layer placed on the current collecting layer is provided, wherein the positive electrode active material layer includes at least one of a positive electrode active material, a sulfide-based solid electrolyte, a binder, and a conductive material. However, without being limited thereto, the positive electrode for an all-solid rechargeable battery may include more or less constituent elements than the constituents described above.

In an embodiment, the positive electrode for an all-solid rechargeable battery is manufactured by applying a positive electrode composition including at least one of a positive electrode active material, a sulfide-based solid electrolyte, a binder, and a conductive material on a current collecting layer, and performing drying and rolling.

### Positive electrode active material

A positive electrode active material may be applied without limitation as long as it is commonly used in an all-solid rechargeable battery. For example, the positive electrode active material may be a compound capable of reversibly intercalating and deintercalating lithium, and may include a compound represented by any one of the following chemical formulae:
LiₐA_{1-b}X_{b}D₂(0.90 ≤ a ≤ 1.8, 0 ≤ b ≤ 0.5);
LiₐA_{1-b}X_{b}O_{2-c}D_{c}(0.90 ≤ a ≤ 1.8, 0 ≤ b ≤ 0.5, 0 ≤ c ≤ 0.05);
LiₐE_{1-b}X_{b}O_{2-c}D_{c} (0.90 ≤ a ≤ 1.8, 0 ≤ b ≤ 0.5, 0 ≤ c ≤ 0.05);
LiₐE_{2-b}X_{b}O_{4-c}D_{c} (0.90 ≤ a ≤ 1.8, 0 ≤ b ≤ 0.5, 0 ≤ c ≤ 0.05);
LiₐNi_{1-b-c}Co_{b}X_{c}D_{α} (0.90 ≤ a ≤1.8, 0 ≤ b ≤ 0.5, 0 ≤ c ≤ 0.5, 0 <α ≤ 2);
LiₐNi_{1-b-c}Co_{b}X_{c}O_{2-α}T_{α}(0.90 ≤ a ≤ 1.8, 0 ≤ b ≤ 0.5, 0 ≤ c ≤ 0.05, 0 <α <2);
LiₐNi_{1-b-c}Co_{b}X_{c}O_{2-α}T₂(0.90 ≤ a ≤ 1.8, 0 ≤ b ≤ 0.5, 0 ≤ c ≤ 0.05, 0 <α <2);
LiₐNi_{1-b-c}Mn_{b}X_{c}D_{α}(0.90 ≤ a ≤ 1.8, 0 ≤ b ≤ 0.5, 0 ≤ c ≤ 0.05, 0 <α ≤ 2);
LiₐNi_{1-b-c}Mn_{b}X_{c}O_{2-α}T_{α}(0.90 ≤ a ≤ 1.8, 0 ≤ b ≤ 0.5, 0 ≤ c ≤ 0.05, 0 <α < 2);
LiₐNi_{1-b-c}Mn_{b}X_{c}O_{2-α}T₂(0.90 ≤ a ≤ 1.8, 0 ≤ b ≤ 0.5, 0 ≤ c ≤ 0.05, 0 <α < 2);
LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);
LiₐNi_{b}Co_{c}Mn_{d}GₑO2 (0.90 ≤ a ≤ 1.8, 0 ≤ b ≤ 0.9, 0 ≤ c ≤ 0.5, 0 ≤ d ≤0.5, 0.001 ≤ e ≤ 0.1);
LiₐNiG_{b}O₂ (0.90 ≤ a ≤ 1.8, 0.001 ≤ b ≤ 0.1);
LiₐCoG_{b}O₂ (0.90 ≤ a ≤ 1.8, 0.001 ≤ b ≤ 0.1);
LiₐMn_{1-b}G_{b}O₂ (0.90 ≤ a ≤ 1.8, 0.001 ≤ b ≤ 0.1);
LiₐMn₂G_{b}O₄ (0.90 ≤ a ≤ 1.8, 0.001 ≤ b ≤ 0.1);
LiₐMn_{1-g}G_{g}PO₄ (0.90 ≤ a ≤ 1.8, 0 ≤ g ≤ 0.5);
QO₂; QS₂; LiQS₂;
V₂O₅; LiV₂O₅;
LiZO₂;
LiNiVO₄;
Li_{(3-f)}J₂PO₄₃ (0 ≤ f ≤ 2);
Li_{(3-f)}Fe₂PO₄₃ (0 ≤ f ≤ 2);
LiₐFePO₄ (0.90 ≤ a ≤ 1.8).

In the above formulae, A is selected from the group consisting of Ni, Co, Mn, and a combination thereof; X is selected from the group consisting of Al, Ni, Co, Mn, Cr, Fe, Mg, Sr, V, rare earth elements, and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

The positive electrode active material may be, for example, lithium cobalt oxide (LCO), lithium nickel oxide (LNO), lithium nickel cobalt oxide (NC), lithium nickel cobalt aluminum oxide (NCA), lithium nickel cobalt manganese oxide (NCM), lithium nickel manganese oxide (NM), lithium manganese oxide (LMO), lithium ferrous phosphate oxide (LFP), or the like.

The positive electrode active material may include a lithium nickel-based oxide represented by the following Chemical Formula 1, a lithium cobalt-based oxide represented by the following Chemical Formula 2, a lithium ferrous phosphate-based compound represented by the following Chemical Formula 3, or a combination of thereof:

[Chemical Formula 1] Liₐ₁Niₓ₁M¹_{y1}M²_{1-x1-y1}O₂

wherein 0.9≤a1≤1.8, 0.3≤x1≤1, 0≤y1≤0.7, and M¹ and M² are independently of each other one or more elements selected from the group consisting of Al, B, Ba, Ca, Ce, Co, Cr, Cu, F, Fe, Mg, Mn, Mo, Nb, P, S, Si, Sr, Ti, V, W, and Zr,

[Chemical Formula 2] Liₐ₂Coₓ₂M³₁₋ₓ₂O₂

wherein 0.9≤a2≤1.8, 0.6≤x2≤1, and M³ is one or more elements selected from the group consisting of Al, B, Ba, Ca, Ce, Cr, Cu, F, Fe, Mg, Mn, Mo, Nb, P, S, Si, Sr, Ti, V, W, and Zr,

[Chemical Formula 3] Liₐ₃Feₓ₃M⁴₁₋ₓ₃PO₄

wherein 0.9≤a3≤1.8, 0.6≤x3≤1, and M⁴ is one or more elements selected from the group consisting of Al, B, Ba, Ca, Ce, Co, Cr, Cu, F, Fe, Mg, Mn, Mo, Nb, P, S, Si, Sr, Ti, V, W, and Zr.

The positive electrode active material may have an average particle diameter (D50) of 1 µm to 25 µm, for example, 3 µm to 25 µm, 5 µm to 25 µm, 5 µm to 20 µm, 8 µm to 20 µm, or 10 µm to 18 µm. The positive electrode active material having the particle diameter range may be mixed with other components harmoniously in the positive electrode active material layer and may implement high capacity and high energy density.

The positive electrode active material may be in a secondary particle form formed by coagulation of a plurality of primary particles, or in a single particle form. In addition, the positive electrode active material may have a shape close to a sphere, or have a polyhedral or irregular shape.

### Sulfide-based solid electrolyte

A sulfide-based solid electrolyte may include, for example, Li₂S-P₂S₅, Li₂S-P₂S₅-LiX (X is a halogen element, for example, I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are an integer, respectively, and Z is Ge, Zn, or Ga), Li₂S-GeS₂, Li₂S-SiS₂-Li₃PO₄, Li₂S-SiS₂-LiₚMO_{q} (p and q are an integer, and M is P, Si, Ge, B, Al, Ga, or In), or a combination thereof.

The sulfide-based solid electrolyte may be obtained by, as an example, mixing Li₂S and P₂S₅ at a mole ratio of 50:50 to 90:10 or a mole ratio of 50:50 to 80:20, and optionally performing a heat treatment. Within the mixing ratio range, a sulfide-based solid electrolyte having excellent ion conductivity may be prepared. The ion conductivity may be further improved by further including SiS₂, GeS₂, B₂S₃, and the like therein as other components.

As a mixing method of a sulfur-containing raw material for preparing a sulfide-based solid electrolyte, mechanical milling or a solution method may be applied. The mechanical milling is a method of adding a starting raw material, a ball mill, and the like in a reactor and performing strong stirring to particulate and mix the starting raw material. When the solution method is used, the starting raw material is mixed in a solvent to obtain a solid electrolyte as a precipitate. In addition, when the heat treatment is performed after mixing, the crystal of the solid electrolyte may become more solid and ion conductivity may be improved. As an example, the sulfide-based solid electrolyte may be prepared by mixing a sulfur-containing raw material and performing a heat treatment twice or more, and in this case, a sulfide-based solid electrolyte which has high ion conductivity and is solid may be prepared.

As an example, the sulfide-based solid electrolyte particles may include an argyrodite type sulfide. The argyrodite type sulfide may be represented by the chemical formula of LiₐM_{b}P_{c}S_{d}Aₑ (a, b, c, d, and e are all 0 or more and 12 or less, M is a metal other than Li or a combination of a plurality of metals other than Li, and A is F, Cl, Br, or I), and as a specific example, may be represented by the chemical formula of Li₇₋ₓPS₆₋ₓAₓ (x is 0.2 or more and 1.8 or less, and A is F, Cl, Br, or I). The argyrodite type sulfide may be, specifically, Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, and the like.

The sulfide-based solid electrolyte particles including the argyrodite type sulfide have a high ion conductivity close to a range of 10⁻⁴ to 10⁻² S/cm which is an ion conductivity of a general liquid electrolyte at room temperature, may form close bonding between the positive electrode active material and the solid electrolyte without causing a decrease in ion conductivity, and furthermore, may form a close interface between the electrode layer and the solid electrolyte layer. The all-solid-state battery including the same may have improved battery performance such as rate characteristics, coulomb efficiency, and lifespan characteristic.

The argyrodite type sulfide-based solid electrolyte may be prepared by, for example, mixing lithium sulfide, phosphorus sulfide, and optionally lithium halide. After mixing them, a heat treatment may be performed. The heat treatment may include, for example, two or more heat treatment steps.

An average particle diameter (D50) of the sulfide-based solid electrolyte particles according to an embodiment may be 5.0 µm or less, for example, 0.1 µm to 5.0 µm, 0.1 µm to 4.0 µm, 0.1 µm to 3.0 µm, 0.5 µm to 2.0 µm, or 0.1 µm to 1.5 µm. Otherwise, the sulfide-based solid electrolyte particles may be small particles having an average particle diameter (D50) of 0.1 µm to 1.0 µm or large particles having an average particle diameter (D50) of 1.5 µm to 5.0 µm, depending on the site or purpose of use. The sulfide-based solid electrolyte particles in the particle diameter range may effectively penetrate between solid particles in a battery and have excellent contact with the electrode active material and excellent connectivity between the solid electrolyte particles. The average particle diameter of the sulfide-based solid electrolyte particle may be measured by a microscopic image, and for example, may be obtained by measuring the size of about 20 or slightly more particles in a scanning electron microscopic image to obtain a particle size distribution and calculating D50 therefrom.

A content of the solid electrolyte in the positive electrode for an all-solid-state battery may be 0.5 wt% to 35 wt%, and for example, may be 1 wt% to 35 wt%, 5 wt% to 30 wt%, 8 wt% to 25 wt%, or 10 wt% to 20 wt%. This is the content with respect to the total weight of the components in the positive electrode, and specifically, may be the content with respect to the total weight of the positive electrode active material layer.

In an embodiment, the positive electrode active material layer may include 50 wt% to 99.35 wt% of the positive electrode active material, 0.5 wt% to 35 wt% of the sulfide-based solid electrolyte, 0.1 wt% to 10 wt% of a fluorinated resin binder, and 0.05 wt% to 5 wt% of vanadium oxide with respect to 100 wt% of the positive electrode active material layer. When the content range as such is satisfied, the positive electrode for an all-solid rechargeable battery maintains high adhesive strength while implementing high capacity and high ion conductivity and has a viscosity of a positive electrode composition maintained at an appropriate level to improve processability.

### Binder

A binder serves to adhere the positive electrode active material particles to each other well, and also adhere the positive electrode active material to the current collector well, and as a representative example, polyvinyl alcohol, carboxylmethyl cellulose, hydroxypropyl cellulose, diacetyl cellulose, polyvinyl chloride, carboxylated polyvinylchloride, polyvinyl fluoride, a polymer including ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like may be used, but is not limited thereto.

### Conductive material

The positive electrode active material layer may further include a conductive material. The conductive material is used for imparting conductivity to an electrode, and for example, may include carbon-based materials such as natural graphite, artificial graphite, carbon black, acetylene black, Ketjen black, carbon fiber, and carbon nanotubes; metal-based material in a metal powder or metal fiber form containing copper, nickel, aluminum, silver, and the like; conductive polymer such as a polyphenylene derivative; or a combination thereof.

The conductive material may be included at 0.1 wt% to 5 wt% or 0.1 wt% to 3 wt%, with respect to the total weight of each component of the positive electrode for an all-solid-state battery or the total weight of the positive electrode active material layer. Within the content range, the conductive material may improve electrical conductivity without deterioration of battery performance.

When the positive electrode active material layer further includes the conductive material, the positive electrode active material layer may include 45 wt% to 99.25 wt% of the positive electrode active material, 0.5 wt% to 35 wt% of the sulfide-based solid electrolyte, 0.1 wt% to 10 wt% of the fluorinated resin binder, 0.05 wt% to 5 wt% of vanadium oxide, and 0.1 wt% to 5 wt% of the conductive material with respect to 100 wt% of the positive electrode active material layer.

Meanwhile, the positive electrode of a lithium rechargeable battery may further include an oxide-based inorganic solid electrolyte in addition to the solid electrolyte described above. The oxide-based inorganic solid electrolyte may include, for example, Li₁₊ₓTi₂₋ₓAl PO₄₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y} PO₄₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, garnet-based ceramics Li₃₊ₓLa₃M₂O₁₂ (M = Te, Nb, or Zr; and x is an integer of 1 to 10), or a combination thereof.

### All-solid-state rechargeable battery

In an embodiment, an all-solid rechargeable battery including the positive electrode described above, a negative electrode, and a solid electrolyte layer placed between the positive electrode and the negative electrode is provided. The all-solid rechargeable battery may also be expressed as an all-solid-state battery or all-solid-state lithium rechargeable battery.

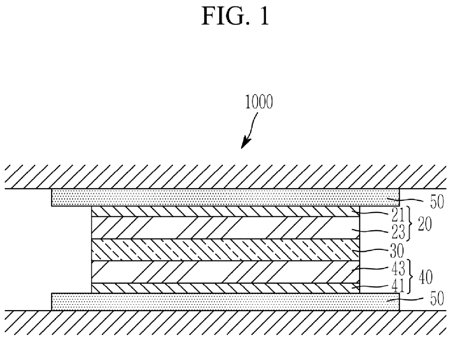

FIG. 1 is a cross-sectional view of the all-solid-state battery.

Referring to FIG. 1, an all-solid-state battery 1000 may have a structure in which an electrode assembly in which a negative electrode 40 including a negative electrode current collecting layer 41 and a negative electrode active material layer 43, a solid electrolyte layer 30, and a positive electrode 20 including a positive electrode active material layer 23 and a positive electrode current collecting layer 21 are laminated is stored in a case such as a pouch. The all-solid-state battery 1000 may further include an elastic layer 50 on at least one outside of the positive electrode 20 and the negative electrode 40. Though FIG. 1 shows an electrode assembly including the negative electrode 40, the solid electrolyte layer 30, and the positive electrode 20, the all-solid-state battery may be manufactured by laminating two or more electrode assemblies.

### Negative electrode

A negative electrode for an all-solid-state battery may include, as an example, a current collecting layer and a negative electrode active material layer placed on the current collecting layer. The negative electrode active material layer includes a negative electrode active material and may further include a binder, a conductive material, and/or a solid electrolyte.

The negative electrode active material may include a material capable of reversibly intercalating/deintercalating lithium ions, a lithium metal, an alloy of a lithium metal, a material capable of being doped and dedoped into lithium, or a transition metal oxide.

The material capable of reversibly intercalating/deintercalating lithium ions is a carbon-based negative electrode active material, and may include, for example, crystalline carbon, amorphous carbon, or combination thereof. An example of the crystalline carbon may include graphite such as amorphous, plate-shaped, flake-shaped, spherical, or fibrous natural graphite or artificial graphite, and an example of the amorphous carbon may include soft carbon or hard carbon, mesophase pitch carbide, fired coke, and the like.

As the alloy of a lithium metal, an alloy of lithium with one or more metals selected from Na, K, Rb, Cs, Fr, Be, Mg, Ca, Sr, Si, Sb, Pb, In, Zn, Ba, Ra, Ge, Al, and Sn.

As the material capable of being doped and dedoped into lithium, a Si-based negative electrode active material or Sn-based negative electrode active material may be used; and the Si-based negative electrode active material may include silicon, a silicon-carbon composite, SiOₓ (0<x<2), a Si-Q alloy (Q is an element selected from the group consisting of alkali metals, alkaline-earth metals, Group 13 elements, Group 14 elements, Group 15 elements, Group 16 elements, transition metals, rare earth elements, and a combination thereof, but not Si), the Sn-based negative electrode active material may include Sn, SnO₂, a Sn-R alloy (R is an element selected from the group consisting of alkali metals, alkaline-earth metals, Group 13 elements, Group 14 elements, Group 15 elements, Group 16 elements, transition metals, rare earth elements, and a combination thereof, but not Sn), and the like, and at least one of them may be mixed with SiO₂. The elements Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be a silicon-carbon composite including, for example, a core including crystalline carbon and silicon particles and an amorphous carbon coating layer placed on the surface of the core. The crystalline carbon may be artificial graphite, natural graphite, or a combination thereof. As the amorphous carbon precursor, coal-based pitch, mesophase pitch, petroleum pitch, petroleum-based oil, petroleum-based heavy oil, or polymer resin such as phenol resin, furan resin, and polyimide resin may be used. Herein, the content of silicon may be 10 wt% to 50 wt% with respect to the total weight of the silicon-carbon composite. In addition, the content of the crystalline carbon may be 10 wt% to 70 wt% with respect to the total weight of the silicon-carbon composite, and the content of the amorphous carbon may be 20 wt% to 40 wt% with respect to the total weight of the silicon-carbon composite. In addition, a thickness of the amorphous carbon coating layer may be 5 nm to 100 nm.

An average particle diameter (D50) of the silicon particles may be 10 nm to 20 µm, and for example, 10 nm to 500 nm. The silicon particles may be present in an oxidized form, in which a Si:O atom content ratio in the silicon particles showing an oxidation degree may be 99:1 to 33:67. The silicon particles may be SiOₓ particles in which an x range may be more than 0 and less than 2. Herein, the average particle diameter (D50) is measured by a particle size analyzer using a laser diffraction method and refers to a diameter of a particle having a cumulative volume of 50 vol% in a particle size distribution.

The Si-based negative electrode active material or Sn-based negative electrode active material may be mixed with a carbon-based negative electrode active material. A mixing ratio between the Si-based negative electrode active material or Sn-based negative electrode active material and the carbon-based negative electrode active material may be 1:99 to 90:10 as a weight ratio.

A content of the negative electrode active material in the negative electrode active material layer may be 95 wt% to 99 wt% with respect to the total weight of the negative electrode active material layer.

In an embodiment, the negative electrode active material layer further includes a binder, and optionally a conductive material. A content of the binder in the negative electrode active material layer may be 1 wt% to 5 wt% with respect to the total weight of the negative electrode active material layer. In addition, when the conductive material is further included, the negative electrode active material layer may include 90 wt% to 98 wt% of the negative electrode active material, 1 wt% to 5 wt% of the binder, and 1 wt% to 5 wt% of the conductive material.

The binder serves to adhere the negative electrode active material particles to each other well and also adhere the negative electrode active material to the current collecting layer well. The binder may include a non-water-soluble binder, a water-soluble binder, or a combination thereof.

The non-water-soluble binder may include, for example, polyvinyl chloride, carboxylated polyvinyl chloride, polyvinyl fluoride, a polymer including ethylene oxide, an ethylene propylene copolymer, polystyrene, polyvinylpyrrolidone, polyurethane, polytetrafluoroethylene, polyvinylidene fluoride, polyethylene, polypropylene, polyamideimide, polyimide, or combination thereof.

The water-soluble binder may include a rubber-based binder or a polymer resin binder. The rubber-based binder may be selected from a styrene-butadiene rubber, an acrylated styrene-butadiene rubber, an acrylonitrile-butadiene rubber, an acryl rubber, a butyl rubber, a fluorine rubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acryl resin, a phenol resin, an epoxy resin, polyvinyl alcohol, and a combination thereof.

When the water-soluble binder is used as the negative electrode binder, a thickener capable of imparting viscosity may be used together, and the thickener may include, for example, a cellulose-based compound. The cellulose-based compound may include carboxymethyl cellulose, hydroxypropyl methyl cellulose, methyl cellulose, an alkali metal salt thereof, or a combination thereof. As the alkali metal, Na, K, or Li may be used. A content of the thickener used may be 0.1 parts by weight to 3 parts by weight with respect to 100 parts by weight of the negative electrode active material.

The conductive material is used for imparting conductivity to an electrode, and may include, for example, a carbon-based material such as natural graphite, artificial graphite, carbon black, acetylene black, Ketjen black, carbon fiber, and carbon nanotubes; a metal-based material in a metal powder or metal fiber form including copper, nickel, aluminum, silver, and the like; a conductive polymer such as a polyphenylene derivative; or a mixture thereof.

As the negative electrode current collecting layer, one selected from a copper foil, a nickel foil, a stainless steel foil, a titanium foil, a nickel foam, a copper foam, a polymer substrate coated with a conductive metal, and a combination thereof may be used.

As another example, the negative electrode for an all-solid-state battery may be a precipitation type negative electrode. The precipitation type negative electrode refers to a negative electrode in which the negative electrode active material is not included during battery assembly, but a lithium metal and the like are precipitated during battery charge and serves as the negative electrode active material.

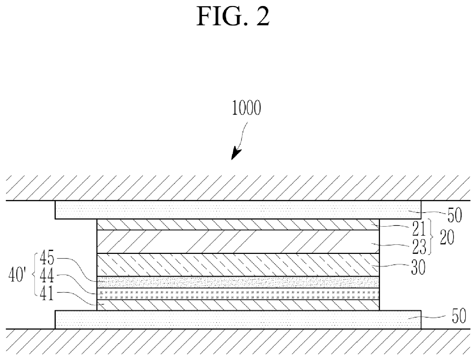

FIG. 2 is a cross-sectional view of an all-solid-state battery including the precipitation type negative electrode.

Referring to FIG. 2, the precipitation type negative electrode 40' may include a current collecting layer 41 and a negative electrode coating layer 45 placed on the current collecting layer 41. In the all-solid-state battery having the precipitation type negative electrode 40', initial charge starts in the absence of the negative electrode active material, and a high-density lithium metal and the like are precipitated between the current collecting layer 41 and the negative electrode coating layer 45 during charge to form a lithium metal layer 44, which may serve as the negative electrode active material. Accordingly, in the all-solid-state battery which has been charged once or more, the precipitation type negative electrode 40' may include the current collecting layer 41, the lithium metal layer 44 placed on the current collecting layer 41, and a negative electrode coating layer 45 placed on the metal layer. The lithium metal layer 44 refers to a layer in which the lithium metal and the like are precipitated during battery charge, and may be referred to as a metal layer, a negative electrode active material layer, or the like.

The negative electrode coating layer 45 may include a metal serving as a catalyst, a carbon material, or a combination thereof.

The metal may include, for example, gold, platinum, palladium, silicon, silver, aluminum, bismuth, tin, zinc, or combination thereof, and may be formed of one of them or various types of alloys. When the metal is present in a particle form, the average particle diameter (D50) may be about 4 µm or less, for example, 10 nm to 4 µm.

The carbon material may be, for example, crystalline carbon, amorphous carbon, or a combination thereof. The crystalline carbon may be, for example, natural graphite, artificial graphite, mesophase carbon microbeads, or a combination thereof. The amorphous carbon may be, for example, carbon black, activated carbon, acetylene black, denka black, Ketjen black, or a combination thereof.

When the negative electrode coating layer 45 includes both the metal and the carbon material, a mixing ratio between the metal and the carbon material may be 1:10 to 2:1 as a weight ratio. In this case, precipitation of the lithium metal may be effectively promoted, and the characteristics of the all-solid-state battery may be improved. The negative electrode coating layer 45 may include, for example, a catalytic metal-supported carbon material, or include a mixture of metal particles and carbon material particles.

The negative electrode coating layer 45 may include a metal and an amorphous carbon as an example, and in this case, precipitation of the lithium metal may be effectively promoted.

The negative electrode coating layer 45 may further include a binder, and the binder may be a conductive binder. In addition, the negative electrode coating layer 45 may further include a filler, a dispersing agent, an ion conductive agent, and the like which are a common additive.

The negative electrode coating layer 45 may have a thickness of, for example, 100 nm to 20 µm, 500 nm to 10 µm, or 1 µm to 5 µm.

The precipitation type negative electrode 40' may further include a thin film on the surface of the current collecting layer 41, that is, between the current collecting layer 41 and the negative electrode coating layer 45, as an example. The thin film may include an element capable of forming an alloy with lithium. The element capable of forming an alloy with lithium may be gold, silver, zinc, tin, indium, silicon, aluminum, bismuth, and the like, and may be formed of one of them or various types of alloys. The thin film may further flatten the precipitation form of the lithium metal layer 44, and may further improve the characteristics of the all-solid-state battery. The thin film may be formed by, for example, a method such as a vacuum deposition method, a sputtering method, and a plating method. The thin film may have a thickness of, for example, 1 nm to 500 nm.

### Solid electrolyte layer

A solid electrolyte layer 30 may include a sulfide-based solid electrolyte, an oxide-based solid electrolyte, and the like. Detailed descriptions of the sulfide-based solid electrolyte and the oxide-based solid electrolyte are as described above.

In an example, the solid electrolyte included in the positive electrode 20 and the solid electrolyte included in the solid electrolyte layer 30 may include the same compound or different compounds. As an example, when both the positive electrode 20 and the solid electrolyte layer 30 include the argyrodite type sulfide-based solid electrolyte, the overall performance of the all-solid rechargeable battery may be improved. In addition, as an example, when both the positive electrode 20 and the solid electrolyte layer 30 include the coated solid electrolyte described above, the all-solid rechargeable battery may implement excellent initial efficiency and lifespan characteristics while implementing high capacity and high energy density.

Meanwhile, the average particle diameter (D50) of the solid electrolyte included in the positive electrode 20 may be smaller than the average particle diameter (D50) of the solid electrolyte included in the solid electrolyte layer 30. In this case, lithium ion mobility is increased while maximizing the energy density of the all-solid-state battery, thereby improving overall performance. For example, the average particle diameter (D50) of the solid electrolyte included in the positive electrode 20 may be 0.1 µm to 1.0 µm or 0.1 µm to 0.8 µm, and the average particle diameter (D50) of the solid electrolyte included in the solid electrolyte layer 30 may be 1.5 µm to 5.0 µm, 2.0 µm to 4.0 µm, or 2.5 µm to 3.5 µm. When the particle diameter range as such is satisfied, lithium ion transfer is easily performed while maximizing the energy density of the all-solid rechargeable battery, thereby suppressing resistance, and thus, the overall performance of the all-solid rechargeable battery may be improved. Herein, the average particle diameter (D50) of the solid electrolyte may be measured by a particle size analyzer using a laser diffraction method. Otherwise, about 20 or slightly more particles are randomly selected in a microscopic photograph measured by a scanning electron microscope and the like and the particle sizes are measured to obtain a particle size distribution, and the D50 value may be calculated therefrom.

The solid electrolyte layer may further include a binder in addition to the solid electrolyte. Herein, as the binder, a styrene butadiene rubber, polytetrafluoroethylene, polyvinylidene fluoride, polyethylene, am acrylate-based polymer, or combination thereof may be used, but it is not limited thereto, and any one may be used as long as it is used as a binder in the art. The acrylate-based polymer may be, for example, butyl acrylate, polyacrylate, polymethacrylate, or combination thereof.

The solid electrolyte layer may be formed by adding a solid electrolyte to a binder solution, coating a substrate film with the solution, and drying. The solvent for the binder solution may be isobutyryl isobutyrate, xylene, toluene, benzene, hexane, or a combination thereof. Since a process for forming the solid electrolyte layer is well known in the art, detailed description thereof will be omitted.

The solid electrolyte layer may have a thickness of, for example, 10 µm to 150 µm.

The solid electrolyte layer may further include an alkali metal salt, an ionic liquid, and/or a conductive polymer.

The alkali metal salt may be, for example, a lithium salt. A content of the lithium salt in the solid electrolyte layer may be 1 M or more, and for example, 1 M to 4 M. In this case, the lithium salt may improve ion conductivity by improving lithium ion mobility of the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate (LiBOB), lithium oxalyldifluoroborate (LIODFB), lithium difluoro(oxalato)borate (LiDFOB), lithium bis(trifluoromethanesulfonyl)imide (LiTFSI, LiN(SO₂CF₃)₂), lithium bis(fluorosulfonyl)imide (LiFSI, LiN(SO₂F)₂), LiCF₃SO₃, LiAsF₆, LiSbF₆, LiClO₄, or a mixture thereof.

In addition, the lithium salt may be imide-based, and for example, the imide-based lithium salt may include lithium bis(trifluoromethanesulfonyl)imide (LiTFSI, LiN(SO₂CF₃)₂) and lithium bis(fluorosulfonyl)imide (LiFSI, LiN (SO₂F)₂). The lithium salt may maintain or improve ion conductivity by appropriately maintaining chemical reactivity with an ionic liquid.

Since the ionic liquid has a melting point equivalent to or lower than room temperature, it refers to a salt which is in a liquid state at room temperature and formed of only ions or a salt melting at room temperature.

The ionic liquid may be a compound including a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based cations, and a mixture thereof, and b) one or more anions selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

The ionic liquid may be, for example, one or more selected from the group consisting of N-methyl-N-propylpyrrolidinium bis(trifluoromethanesulfonyl)imide, N-butyl-N-methylpyrrolidinium bis(3-trifluoromethylsulfonyl)imide, 1-butyl-3-methylimidazolium bis(trifluoromethylsulfonyl)amide, and 1-ethyl-3-methylimidazolium bis(trifluoromethylsulfonyl)amide.

In the solid electrolyte layer, a weight ratio between the solid electrolyte and the ionic liquid may be 0.1:99.9 to 90:10, and for example, may be 10:90 to 90:10, 20:80 to 90:10, 30:70 to 90:10, 40:60 to 90:10, or 50:50 to 90:10. The solid electrolyte layer satisfying the range may have an improved electrochemical contact area with an electrode to maintain or improve ion conductivity. Accordingly, the energy density, the discharge capacity, the rate properties, and the like of the all-solid-state battery may be improved.

The all-solid-state battery may be a unit cell having a structure of positive electrode/ solid electrolyte layer/ negative electrode, a bicell having a structure of positive electrode/ solid electrolyte layer/negative electrode/ solid electrolyte layer/ positive electrode, or a laminated battery having a repeated unit cell structure.

The shape of the all-solid-state battery is not particularly limited, and may be, for example, a coin shape, a button shape, a sheet shape, a laminated shape, a cylindrical shape, a flat shape, or the like. In addition, the all-solid-state battery may also be applied to a large battery used in electric vehicles and the like. For example, the all-solid-state battery may also be used in hybrid vehicles such as a plug-in hybrid electric vehicle (PHEV). In addition, it may be used in the field requiring a large amount of power storage, and for example, may be used in electric bicycles, power tools, or the like.

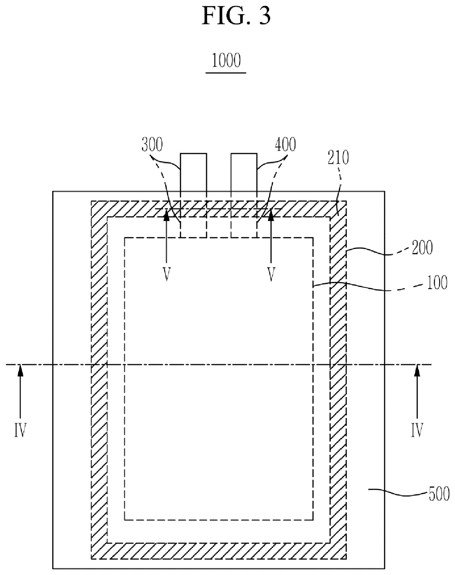

Hereinafter, referring to FIGS. 3 to 6, the all-solid rechargeable battery according to an embodiment will be described. The all-solid rechargeable battery 1000 according to an embodiment is a rechargeable battery capable of charging and discharging. Hereinafter, the positive electrode includes a cathode, and the negative electrode includes an anode.

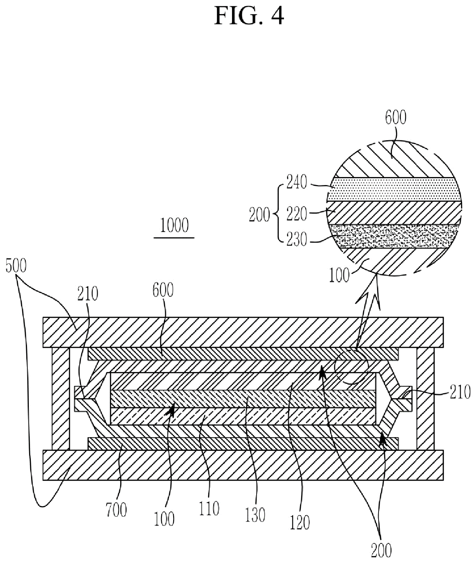

FIG. 3 is a top plan view showing the all-solid rechargeable battery according to an embodiment. FIG. 4 is a cross-sectional view taken along the line IV-IV of FIG. 3.

Referring to FIGS. 3 and 4, an all-solid rechargeable battery 1000 according to an embodiment includes an all-solid-state electrode assembly 100, a pouch 200, a negative electrode tab 300, a positive electrode tab 400, a pressurizing jig 500, a first elastic layer 600, and a second elastic layer 700.

The all-solid-state electrode assembly 100 is stored inside the pouch 200. The all-solid-state electrode assembly 100 includes a negative electrode 110, a positive electrode 120, and a solid electrolyte layer 130.

The negative electrode 110 may include the negative electrode included in the all-solid rechargeable battery described above, but is not limited thereto. The negative electrode 110 may have a plate or foil form, but is not limited thereto.

The positive electrode 120 is placed on the negative electrode 110 with the solid electrolyte layer 130 interposed therebetween. The positive electrode 120 may include the positive electrode included in the all-solid rechargeable battery described above, but is not limited thereto. The positive electrode 120 may have a plate or foil form, but is not limited thereto.

The solid electrolyte layer 130 is placed between the negative electrode 110 and the positive electrode 120. The solid electrolyte layer 130 may include the solid electrolyte layer included in the all-solid rechargeable battery described above, but is not limited thereto. The solid electrolyte layer 130 may be a layer shape between the negative electrode 110 and the positive electrode 120, but is not limited thereto.

The all-solid-state electrode assembly 100 may have various known lamination structures. As an example, the all-solid-state electrode assembly 100 may have a structure of a unit cell having a structure of positive electrode/ solid electrolyte layer/ negative electrode, a bicell having a structure of positive electrode/ solid electrolyte layer/ negative electrode/ solid electrolyte layer/ positive electrode, or a lamination battery having repeated unit cell structures, but is not limited thereto.

The all-solid-state electrode assembly 100 may include a plurality of laminated all-solid-state electrode assemblies 100. As an example, various known elastic layers may be placed between the plurality of all-solid-state electrode assemblies 100 laminated in one direction.

The pouch 200 stores the all-solid-state electrode assembly 100 in the inner space. The pouch 200 has a rectangular shape plan, but is not limited thereto, and may have a polygonal shape such as triangles, pentagons, hexagons, heptagons, and octagons, a circular shape, an oval shape, or a loop shape in plan. The pouch 200 includes a sealing part 210, a metal layer 220, an inner organic material layer 230, and an outer organic material layer 240.

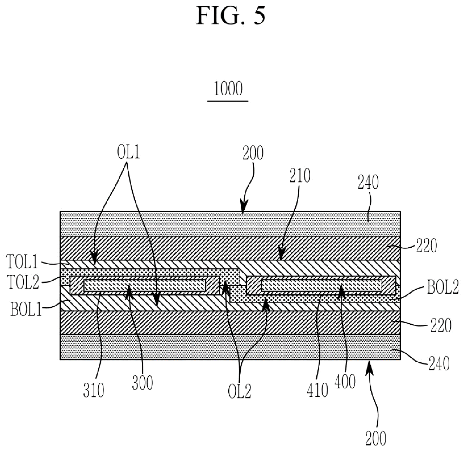

FIG. 5 is a cross-sectional view taken along the line V-V of FIG. 3.

Referring to FIGS. 3 to 5, the sealing part 210 surrounds the border of the all-solid-state electrode assembly 100, and seals the inner space of the pouch 200 which stores the all-solid-state electrode assembly 100. The sealing part 210 includes a first organic material layer (OL1) and a second organic material layer (OL2).

The first organic material layer (OL1) is placed on an inner surface of the metal layer 220, and is in contact with the negative electrode tab 300 and the positive electrode tab 400 which protrudes from the all-solid-state electrode assembly 100 through the sealing part 210 to the outside of the pouch 200. The first organic material layer (OL1) may melt at a predetermined first temperature. As an example, the first organic material layer (OL1) may melt at a first temperature including 170°C to 180°C or a first temperature including 140°C to 210°C, but is not limited thereto. The first organic material layer (OL1) may include various known organic materials. As an example, the first organic material layer (OL1) may include a polymer including polypropylene, polyethylene terephthalate, polyimide, and the like, but is not limited thereto.

The first organic material layer (OL1) includes a first bottom organic material layer (BOL1) and a first top organic material layer (TOL1). As an example, the first bottom organic material layer (BOL1) may be a layer placed in the lower portion based on the negative electrode tab 300 and the positive electrode tab 400, but is not limited thereto, and the first bottom organic material layer (BOL1) may be a layer placed in the upper portion based on the negative electrode tab 300 and the positive electrode tab 400. As another example, the first top organic material layer (TOL1) may be a layer placed in the upper portion based on the negative electrode tab 300 and the positive electrode tab 400, but is not limited thereto, and the first top organic material layer (TOL1) may be a layer placed in the lower portion based on the negative electrode tab 300 and the positive electrode tab 400.

The first bottom organic material layer (BOL1) is placed on the rear surface of the negative electrode tab 300 and the rear surface of the positive electrode tab 400. The first bottom organic material layer (BOL1) is in contact with the rear surface of the negative electrode tab 300. The first bottom organic material layer (BOL1) is separated from the rear surface of the positive electrode tab 400 with the second organic material layer (OL2) interposed therebetween. The first bottom organic material layer (BOL1) may be in contact with the rear surface of the negative electrode tab 300 and joined to the negative electrode tab 300, but is not limited thereto.

The first top organic material layer (TOL1) is placed on the front surface of the negative electrode tab 300 and the front surface of the positive electrode tab 400. The first top organic material layer (TOL1) is in contact with the front surface of the positive electrode tab 400. The first top organic material layer (TOL1) is separated from the front surface of the negative electrode tab 300 with the second organic material layer (OL2) interposed therebetween. The first top organic material layer (TOL1) may be in contact with the front surface of the positive electrode tab 400 and joined to the positive electrode tab 400, but is not limited thereto.

The first organic material layer (OL1) may be placed throughout the sealing part 210, but is not limited thereto. As an example, the first organic material layer (OL1) may be placed in a part of the sealing part 210 in which the negative electrode tab 300 and the positive electrode tab 400 are placed. As another example, the first organic material layer (OL1) may be placed throughout the inside of the pouch 200, but is not limited thereto.

The second organic material layer (OL2) is placed between the first organic material layer (OL1) and the negative electrode tab 300 and between the first organic material layer (OL1) and the positive electrode tab 400. The second organic material layer (OL2) is in contact with the negative electrode tab 300, the positive electrode tab 400, and the first organic material layer (OL1). The second organic material layer (OL2) may melt at a second temperature lower than the first temperature at which the first organic material layer (OL1) melts. As an example, the second organic material layer (OL2) may melt at the second temperature including 130°C to 150°C or the second temperature including 100°C to 180°C, but is not limited thereto. The second organic material layer (OL2) may include various known organic materials. As an example, the second organic material layer (OL2) may include a polymer including polypropylene, polyethylene terephthalate, polyimide, and the like, but is not limited thereto.

The second organic material layer (OL2) includes a second bottom organic material layer (BOL2) and a second top organic material layer (TOL2). As an example, the second bottom organic material layer (BOL2) may be a layer placed in the lower portion based on the negative electrode tab 300 and the positive electrode tab 400, but is not limited thereto, and the second bottom organic material layer (BOL2) may be a layer placed in the upper portion based on the negative electrode tab 300 and the positive electrode tab 400. As another example, the second top organic material layer (TOL2) may be a layer placed in the upper portion based on the negative electrode tab 300 and the positive electrode tab 400, but is not limited thereto, and the second top organic material layer (TOL2) may be a layer placed in the lower portion based on the negative electrode tab 300 and the positive electrode tab 400.

The second bottom organic material layer (BOL2) is placed between the first bottom organic material layer (BOL1) of the first organic material layer (OL1) and the positive electrode tab 400. The second bottom organic material layer (BOL2) is in contact with the rear surface of the positive electrode tab 400.

The positive electrode tab 400 and the first bottom organic material layer (BOL1) of the first organic material layer (OL1) are separated with the second bottom organic material layer (BOL2) interposed therebetween. The second bottom organic material layer (BOL2) may be in contact with the positive electrode tab 400 and joined to the positive electrode tab 400, but is not limited thereto. The second bottom organic material layer (BOL2) may be inserted into the first bottom organic material layer (BOL1), but is not limited thereto. As an example, the second bottom organic material layer (BOL2) may be placed on the first bottom organic material layer (BOL1) and placed between the positive electrode tab 400 and the first bottom organic material layer (BOL1).

The second top organic material layer (TOL2) is placed between the first top organic material layer (TOL1) of the first organic material layer (OL1) and the negative electrode tab 300. The second top organic material layer (TOL2) is in contact with the front surface of the negative electrode tab 300. The negative electrode tab 300 and the first top organic material layer (TOL1) of the first organic material layer (OL1) are separated with the second top organic material layer (TOL2) interposed therebetween. The second top organic material layer (TOL2) may be in contact with the negative electrode tab 300 and joined to the negative electrode tab 300, but is not limited thereto. The second top organic material layer (TOL2) may be inserted into the first top organic material layer (TOL1), but is not limited thereto. As an example, the second top organic material layer (TOL2) may be placed on the first top organic material layer (TOL1) and placed between the negative electrode tab 300 and the first top organic material layer (TOL1).

The second organic material layer (OL2) may be placed in a part of the sealing part 210 in which the negative electrode tab 300 and the positive electrode tab 400 are place, but is not limited thereto. As an example, the second organic material layer (OL2) may be placed throughout the sealing part 210. As another example, the second organic material layer (OL2) may be placed throughout the inside of the pouch 200, but is not limited thereto.

The metal layer 220 surrounds the all-solid-state electrode assembly 100. The metal layer 220 includes aluminum, but is not limited thereto, and may include various metals.

The inner organic material layer 230 is placed on the inner surface of the metal layer 220, and is placed between the all-solid-state electrode assembly 100 and the metal layer 220. The inner organic material layer 230 may be coated on the inner surface of the metal layer 220, but is not limited thereto. The inner organic material layer 230 may include a polymer including polypropylene, polyethylene terephthalate, polyimide, and the like, but is not limited thereto. The inner organic material layer 230 may be integrated with the first organic material layer (OL1) included in the sealing part 210, but is not limited thereto. As an example, the inner organic material layer 230 may be the same layer as the first organic material layer (OL1), but is not limited thereto, and the inner organic material layer 230 may be a layer different from the first organic material layer (OL1). The inner organic material layer 230 may be a single layer or a plurality of layers.

The outer organic material layer 240 is placed on the outer surface of the metal layer 220. The outer organic material layer 240 may be coated on the outer surface of the metal layer 220, but is not limited thereto. The outer organic material layer 240 may include a polymer including nylon, polypropylene, polyethylene terephthalate, polyimide, and the like, but is not limited thereto. The outer organic material layer 240 may be a single layer or a plurality of layers.

The negative electrode tab 300 protrudes from the negative electrode 110 of the all-solid-state electrode assembly 100 through the sealing part 210 to the outside of the pouch 200. The negative electrode tab 300 may be integrated with the negative electrode 110 of the all-solid-state electrode assembly 100, but is not limited thereto, and may include various known conductive tabs connected to the negative electrode 110 of the all-solid-state electrode assembly 100. The negative electrode tab 300 is placed closer to the first bottom organic material layer (BOL1) of the first organic material layer (OL1) of the sealing part 210 than the positive electrode tab 400 and is joined to the first bottom organic material layer (BOL1). The negative electrode tab 300 includes a first sealant 310 coated on the surface of the negative electrode tab 300.

The first sealant 310 is coated on the surface of the negative electrode tab 300 and may include various known insulating materials.

The negative electrode tab 300 is placed adjacent to the positive electrode tab 400, but is not limited thereto.

As an example, the negative electrode tab 300 is placed adjacent to the positive electrode tab 400 in one end of the all-solid-state electrode assembly 100, but is not limited thereto, and the negative electrode tab 300 may be placed to be separated from the positive electrode tab 400 with the all-solid-state electrode assembly 100 interposed therebetween in the other end of the all-solid-state electrode assembly 100.

As another example, the negative electrode tab 300 may protrude from the negative electrode 110 of the all-solid-state electrode assembly 100 through the sealing part 201 to the outside of the pouch 200, in various known positions of the all-solid-state electrode assembly 100, regardless of the position of the positive electrode tab 400.

The positive electrode tab 400 is separated from the negative electrode tab 300 and protrudes from the positive electrode 120 of the all-solid-state electrode assembly 100 through the sealing part 210 to the outside of the pouch 200. The positive electrode tab 400 may be integrated with the positive electrode 120 of the all-solid-state electrode assembly 100, but is not limited thereto, and may include various known conductive tabs connected to the positive electrode 120 of the all-solid-state electrode assembly 100. The positive electrode tab 400 is placed closer to the first top organic material layer (TOL1) of the first organic material layer (OL1) of the sealing part 210 than the negative electrode tab 300 and joined to the first top organic material layer (TOL1).

The positive electrode tab 400 includes a second sealant 410 coated on the surface of the positive electrode tab 400.

The second sealant 410 is coated on the surface of the positive electrode tab 400 and may include various known insulating materials.

Though the positive electrode tab 400 is adjacent to the negative electrode tab 300, but is not limited thereto.

As an example, the positive electrode tab 400 is placed adjacent to the negative electrode tab 300 in one end of the all-solid-state electrode assembly 100, but is not limited thereto, and the positive electrode tab 400 may be placed to be separated from the negative electrode tab 300 with the all-solid-state electrode assembly 100 interposed therebetween in the other end of the all-solid-state electrode assembly 100.

As another example, the positive electrode tab 400 may protrude from the positive electrode 120 of the all-solid-state electrode assembly 100 through the sealing part 201 to the outside of the pouch 200, in various known positions of the all-solid-state electrode assembly 100, regardless of the position of the negative electrode tab 300.

A pressurizing jig 500 pressurizes front and rear surfaces of the pouch 200. The pressurizing jig 500 pressurizes the front and rear surfaces of the pouch 200 to apply pressure to the all-solid-state electrode assembly 100 placed inside the pouch 200. The battery efficiency of the all-solid-state electrode assembly 100 may be improved by the pressurizing jig 500. The pressurizing jig 500 may have various jig forms capable of pressurizing the pouch 200.

A first elastic layer 600 is placed between the front surface of the pouch 200 and the pressurizing jig 500. The first elastic layer 600 may disperse the pressure applied to the pouch 200 by the pressurizing jig 500 and also suppress damage of the pouch 200 by the pressure by the pressurizing jig 500. The first elastic layer 600 includes various known elastic layers.

A second elastic layer 700 is placed between the rear surface of the pouch 200 and the pressurizing jig 500. The second elastic layer 700 may disperse the pressure applied to the pouch 200 by the pressurizing jig 500 and also suppress damage of the pouch 200 by the pressure by the pressurizing jig 500. The second elastic layer 700 includes various known elastic layers.

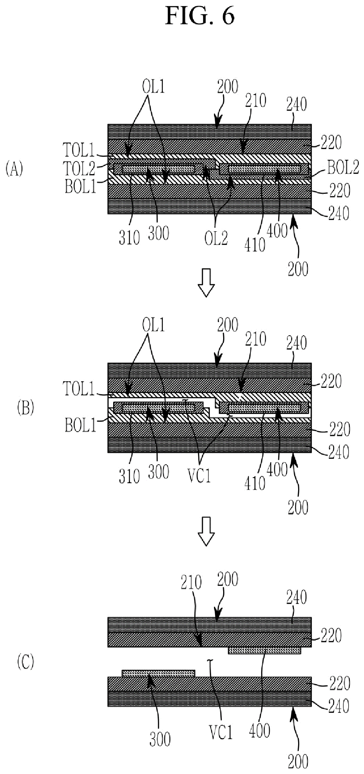

FIG. 6 is cross-sectional views showing a part of the all-solid rechargeable battery according to an embodiment in order to describe the effect of the all-solid rechargeable battery according to an embodiment.

Referring to FIG. 6, when the temperature of the all-solid-state electrode assembly placed inside the pouch 200 rises, the ignition limit temperature of the all-solid-state electrode assembly is higher than the limit temperature of the pouch 200, and thus, the second organic material layer (OL2) and the first organic material layer (OL1) included in the sealing part 210 of the pouch 200 melt sequentially as the temperatures of the negative electrode tab 300 and the positive electrode tab 400 connected to the all-solid-state electrode assembly rise and heat inside the pouch 200 is released to the outside, thereby suppressing the thermal runaway of the all-solid-state electrode assembly.

Specifically, referring to (A) and (B) FIG. 6, when the temperature of the all-solid-state electrode assembly placed inside the pouch 200 rises to raise the temperatures of the negative electrode tab 300 and the positive electrode tab 400 connected to the all-solid-state electrode assembly, the second top organic material layer (TOL2) of the second organic material layer (OL2) in contact with the front surface of the negative electrode tab 300 and the second bottom organic material layer (BOL2) of the second organic material layer (OL2) in contact with the rear surface of the positive electrode tab 400 melt to form a first vent channel (VC1) first, and subsequently, the first top organic material layer (TOL1) and the first bottom organic material layer (BOL1) of the first organic material layer (OL1) melt to extend the first vent channel (VC1), thereby releasing heat inside the pouch 200 to the outside through the first vent channel (VC1) to suppress the thermal runaway of the all-solid-state electrode assembly.

In addition, since a part of the sealing part 210 of the pouch 200 in which the negative electrode tab 300 in contact with the first bottom organic material layer (BOL1) of the first organic material layer (OL1) and the positive electrode tab 400 in contact with the first top organic material layer (TOL1) of the first organic material layer (OL1) are placed is opened in different directions by the first vent channel (VC1) formed by the melting second organic material layer (OL2), short circuit between the negative electrode tab 300 and the positive electrode tab 400 and short circuit between the negative electrode tab 300/ positive electrode tab 400 and the metal layer 220 of the pouch 200 are suppressed.

Referring to (C) of FIG. 6, as the temperatures of the negative electrode tab 300 and the positive electrode tab 400 rise, the first organic material layer (OL1) included in the sealing part 210 of the pouch 200, the first sealant 310 of the negative electrode tab 300, and the second sealant 410 of the positive electrode tab 400 may melt, but since the negative electrode tab 300 and the positive electrode tab 400 are in contact with the metal layer 220 of the pouch 200 placed in different directions, short circuit between the negative electrode tab 300 and the positive electrode tab 400 is suppressed.

As an example, an all-solid rechargeable battery in which when heat is produced inside the pouch 200 of the all-solid rechargeable battery 1000, a part of the pouch 200 is opened to suppress the thermal runaway of the all-solid rechargeable battery 1000 is provided.

In addition, an all-solid rechargeable battery 1000 in which when heat is produced inside the pouch 200 of the all-solid rechargeable battery 1000, short circuit of the electrodes of the all-solid-state electrode assembly 100 is suppressed is provided.

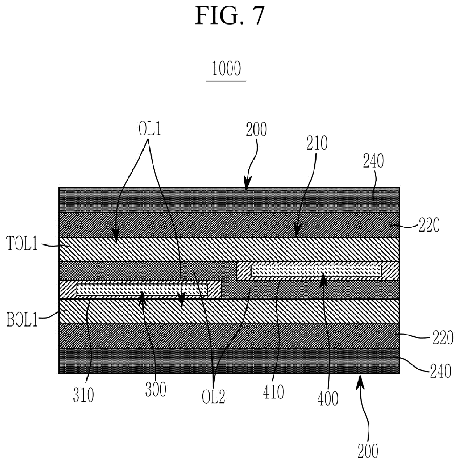

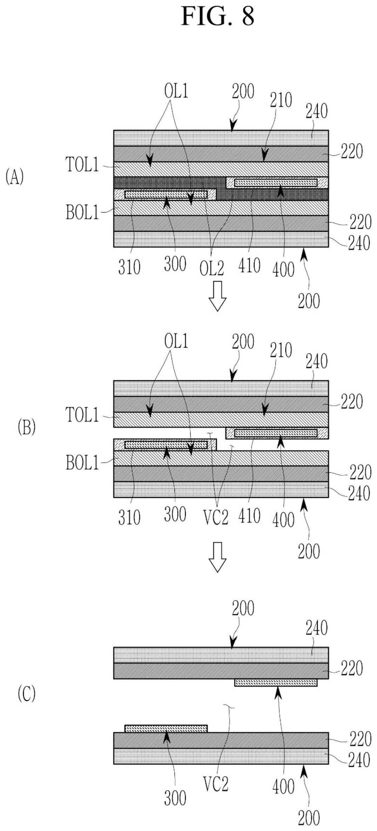

Hereinafter, referring to FIGS. 7 and 8, the all-solid rechargeable battery according to another embodiment will be described. The parts other than those of the all-solid rechargeable battery according to an embodiment described above will be described below.

FIG. 7 is a cross-sectional view showing a part of the all-solid rechargeable battery according to another embodiment.

Referring to FIG. 7, a sealing part 210 of the all-solid rechargeable battery 1000 according to another embodiment includes a first organic material layer (OL1) and a second organic material layer (OL2).

The first organic material layer (OL1) is placed on the inner surface of a metal layer 220, and is in contact with the negative electrode tab 300 and the positive electrode tab 400 which protrude from the all-solid rechargeable battery 1000 through the sealing part 210 to the outside of the pouch 200. The first organic material layer (OL1) may melt at a predetermined first temperature. As an example, the first organic material layer (OL1) may melt at the first temperature including 170°C to 180°C and the first temperature including 140°C to 210°C. The first organic material layer (OL1) may include various known organic materials. As an example, the first organic material layer (OL1) may include a polymer including polypropylene, polyethylene terephthalate, polyimide, and the like, but is not limited thereto.

The first organic material layer (OL1) includes a first bottom organic material layer (BOL1) and a first top organic material layer (TOL1). As an example, the first bottom organic material layer (BOL1) may be a layer placed in the lower portion based on the negative electrode tab 300 and the positive electrode tab 400, but is not limited thereto, and the first bottom organic material layer (BOL1) may be a layer placed in the upper portion based on the negative electrode tab 300 and the positive electrode tab 400. As another example, the first top organic material layer (TOL1) may be a layer placed in the upper portion based on the negative electrode tab 300 and the positive electrode tab 400, but is not limited thereto, and the first top organic material layer (TOL1) may be a layer placed in the lower portion based on the negative electrode tab 300 and the positive electrode tab 400.

The first bottom organic material layer (BOL1) is placed on the rear surface of the negative electrode tab 300 and the rear surface of the positive electrode tab 400. The first bottom organic material layer (BOL1) is in contact with the rear surface of the negative electrode tab 300. The first bottom organic material layer (BOL1) is separated from the rear surface of the positive electrode tab 400 with the second organic material layer (OL2) interposed therebetween. The first bottom organic material layer (BOL1) may be in contact with the rear surface of the negative electrode tab 300 and joined to the negative electrode tab 300, but is not limited thereto.

The first top organic material layer (TOL1) is placed on the front surface of the negative electrode tab 300 and the front surface of the positive electrode tab 400. The first top organic material layer (TOL1) is in contact with the front surface of the positive electrode tab 400. The first top organic material layer (TOL1) is separated from the front surface of the negative electrode tab 300 with the second organic material layer (OL2) interposed therebetween. The first top organic material layer (TOL1) may be in contact with the front surface of the positive electrode tab 400 and joined to the positive electrode tab 400, but is not limited thereto.

The first organic material layer (OL1) may be placed throughout the sealing part 210, but is not limited thereto. As an example, the first organic material layer (OL1) may be placed in a part of the sealing part 210 in which the negative electrode tab 300 and the positive electrode tab 400 are placed. As another example, the first organic material layer (OL1) may be placed throughout the inside of the pouch 200, but is not limited thereto.

The second organic material layer (OL2) is placed between the first organic material layer (OL1) and the negative electrode tab 300 and between the first organic material layer (OL1) and the positive electrode tab 400. The second organic material layer (OL2) is in contact with the negative electrode tab 300, the positive electrode tab 400, and the first organic material layer (OL1). The second organic material layer (OL2) may melt at a second temperature lower than the first temperature at which the first organic material layer (OL1) melts. As an example, the second organic material layer (OL2) may melt at the second temperature including 130°C to 150°C or the second temperature including 100°C to 180°C, but is not limited thereto. The second organic material layer (OL2) may include various known organic materials. As an example, the second organic material layer (OL2) may include a polymer including polypropylene, polyethylene terephthalate, polyimide, and the like, but is not limited thereto.

The second organic material layer (OL2) extends from between the front surface of the negative electrode tab 300 and the first top organic material layer (TOL1) to between the rear surface of the positive electrode tab 400 and the first bottom organic material layer (BOL1). The second organic material layer (OL2) is placed between the first bottom organic material layer (BOL1) of the first organic material layer (OL1) and the positive electrode tab 400. The second organic material layer (OL2) is in contact with the rear surface of the positive electrode tab 400. The positive electrode tab 400 and the first bottom organic material layer (BOL1) of the first organic material layer (OL1) are separated with the second organic material layer (OL2) interposed therebetween. The second organic material layer (OL2) may be in contact with the positive electrode tab 400 and joined to the positive electrode tab 400, but is not limited thereto.

The second organic material layer (OL2) is placed between the first top organic material layer (TOL1) of the first organic material layer (OL1) and the negative electrode tab 300. The second organic material layer (OL2) is in contact with the front surface of the negative electrode tab 300. The negative electrode tab 300 and the first top organic material layer (TOL1) of the first organic material layer (OL1) are separated with the second organic material layer (OL2) interposed therebetween. The second organic material layer (OL2) may be in contact with the negative electrode tab 300 and joined to the negative electrode tab 300, but is not limited thereto.

The second organic material layer (OL2) may be placed in a part of the sealing part 210 in which the negative electrode tab 300 and the positive electrode tab 400 are placed, but is not limited thereto. As an example, the second organic material layer (OL2) may be placed throughout the sealing part 210. As another example, the second organic material layer (OL2) may be placed throughout the inside of the pouch 200, but is not limited thereto.

FIG. 8 is cross-sectional views showing a part of an all-solid rechargeable battery according to another embodiment in order to describe the effect of the all-solid rechargeable battery according to another embodiment.

Referring to FIG. 8, when the temperature of the all-solid-state electrode assembly placed inside the pouch 200 rises, the ignition limit temperature of the all-solid-state electrode assembly is higher than the limit temperature of the pouch 200, and thus, the second organic material layer (OL2) and the first organic material layer (OL1) included in the sealing part 210 of the pouch 200 melt sequentially as the temperatures of the negative electrode tab 300 and the positive electrode tab 400 connected to the all-solid-state electrode assembly rise and heat inside the pouch 200 is released to the outside, thereby suppressing the thermal runaway of the all-solid-state electrode assembly.

Specifically, referring to (A) and (B) FIG. 8, when the temperature of the all-solid-state electrode assembly placed inside the pouch 200 rises to raise the temperatures of the negative electrode tab 300 and the positive electrode tab 400 connected to the all-solid-state electrode assembly, the second organic material layer (OL2) in contact with the front surface of the negative electrode tab 300 and the rear surface of the positive electrode 400 melts to form a second vent channel (VC2) first, and subsequently, the first top organic material layer (TOL1) and the first bottom organic material layer (BOL1) of the first organic material layer (OL1) melt to extend the second vent channel (VC2), thereby releasing heat inside the pouch 200 to the outside through the second vent channel (VC2) to suppress the thermal runaway of the all-solid-state electrode assembly.

In addition, since a part of the sealing part 210 of the pouch 200 in which the negative electrode tab 300 in contact with the first bottom organic material layer (BOL1) of the first organic material layer (OL1) and the positive electrode tab 400 in contact with the first top organic material layer (TOL1) of the first organic material layer (OL1) are placed is opened in different directions by the second vent channel (VC2) formed by the melting second organic material layer (OL2), short circuit between the negative electrode tab 300 and the positive electrode tab 400 and short circuit between the negative electrode tab 300/ positive electrode tab 400 and the metal layer 220 of the pouch 200 are suppressed.

Referring to (C) of FIG. 8, as the temperatures of the negative electrode tab 300 and the positive electrode tab 400 rise, the first organic material layer (OL1) included in the sealing part 210 of the pouch 200, the first sealant 310 of the negative electrode tab 300, and the second sealant 410 of the positive electrode tab 400 may melt, but since the negative electrode tab 300 and the positive electrode tab 400 are in contact with the metal layer 220 of the pouch 200 placed in different directions, short circuit between the negative electrode tab 300 and the positive electrode tab 400 is suppressed.

As an example, an all-solid rechargeable battery in which when heat is produced inside the pouch 200 of the all-solid rechargeable battery 1000, a part of the pouch 200 is opened to suppress the thermal runaway of the all-solid rechargeable battery 1000 is provided.

In addition, an all-solid rechargeable battery 1000 in which when heat is produced inside the pouch 200 of the all-solid rechargeable battery 1000, short circuit of the electrodes of the all-solid-state electrode assembly 100 is suppressed is provided.

Though the embodiments of the present disclosure have been described in detail above, the scope of rights of the present disclosure is not limited thereto, and many variations and modifications by a person skilled in the art using the basic concept of the present disclosure as defined in the following claims also belong to the scope of rights of the present disclosure.

### [Description of main elements]

All-solid-state electrode assembly 100, negative electrode 110, positive electrode 120, solid electrolyte layer 130, pouch 200, sealing part 210, first organic material layer (OL1), second organic material layer (OL2), negative electrode tab 300, positive electrode tab 400

## Claims

1. An all-solid rechargeable battery comprising:
an all-solid-state electrode assembly including a negative electrode, a positive electrode, and a solid electrolyte layer placed between the negative electrode and the positive electrode;
a pouch which stores the all-solid-state electrode assembly in an inner space and includes a sealing part which seals the inner space;
a negative electrode tab which protrudes from the negative electrode of the all-solid-state electrode assembly through the sealing part to the outside of the pouch; and
a positive electrode tab which is separated from the negative electrode tab and protrudes from the positive electrode of the all-solid-state electrode assembly through the sealing part to the outside of the pouch,
wherein
the sealing part includes:
a first organic material layer which is in contact with the negative electrode tab and the positive electrode tab and melts at a first temperature; and
a second organic material layer which is in contact with the negative electrode tab, the positive electrode tab, and the first organic material layer and melts at a second temperature lower than the first temperature.

2. The all-solid rechargeable battery as claimed in claim 1, wherein:
the first organic material layer includes:
a first bottom organic material layer placed on a rear surface of the negative electrode tab and a rear surface of the positive electrode tab; and
a first top organic material layer placed on a front surface of the negative electrode tab and a front surface of the positive electrode.

3. The all-solid rechargeable battery as claimed in claim 2, wherein:
the first bottom organic material layer is in contact with the rear surface of the negative electrode tab.

4. The all-solid rechargeable battery as claimed in claim 3, wherein:
the first bottom organic material layer is separated from the rear surface of the positive electrode tab.

5. The all-solid rechargeable battery as claimed in claim 4, wherein:
the second organic material layer includes a second bottom organic material layer placed between the first bottom organic material layer and the positive electrode tab.

6. The all-solid rechargeable battery as claimed in claim 5, wherein:
the second bottom organic material layer is in contact with the positive electrode tab.

7. The all-solid rechargeable battery as claimed in claim 5, wherein:
the second bottom organic material layer is inserted into the first bottom organic material layer.

8. The all-solid rechargeable battery as claimed in claim 2, wherein:
the first top organic material layer is in contact with the front surface of the positive electrode tab.

9. The all-solid rechargeable battery as claimed in claim 8, wherein:
the first top organic material layer is separated from the front surface of the negative electrode tab.

10. The all-solid rechargeable battery as claimed in claim 9, wherein:
the second organic material layer includes a second top organic material layer placed between the first top organic material layer and the negative electrode tab.

11. The all-solid rechargeable battery as claimed in claim 10, wherein:
the second top organic material layer is in contact with the negative electrode tab.

12. The all-solid rechargeable battery as claimed in claim 10, wherein:
the second top organic material layer is inserted into the first top organic material layer.

13. The all-solid rechargeable battery as claimed in claim 2, wherein:
the negative electrode tab is closer to the first bottom organic material layer than the positive electrode tab, and
the positive electrode tab is closer to the first top organic material layer than the negative electrode tab.

14. The all-solid rechargeable battery as claimed in claim 2, wherein:
the second organic material layer extends from between the front surface of the negative electrode tab and the first top organic material layer to between the rear surface of the positive electrode tab and the first bottom organic material layer.

15. The all-solid rechargeable battery as claimed in claim 1, further comprising:
a pressurizing jig which pressurizes front and rear surfaces of the pouch.

16. The all-solid rechargeable battery as claimed in claim 1, wherein:
the second temperature includes 130°C to 150°C.

17. The all-solid rechargeable battery as claimed in claim 1, wherein:
the first temperature includes 170°C to 180°C.

18. The all-solid rechargeable battery as claimed in claim 1, wherein:
the pouch further includes:
a metal layer surrounding the all-solid-state electrode assembly;
an inner organic material layer placed on an inner surface of the metal layer; and
an outer organic material layer placed on an outer surface of the metal layer.

19. The all-solid rechargeable battery as claimed in claim 18, wherein:
the inner organic material layer is integrated with the first organic material layer.

20. The all-solid rechargeable battery as claimed in claim 1, wherein:
each of the negative electrode tab and the positive electrode tab includes a sealant coated on the surface.
